# EUROPÄISCHE PATENTSCHRIFT

(11) **EP 2 368 689 B1**
(45) Veröffentlichungstag und Bekanntmachung des Hinweises auf die Patenterteilung: **26.11.2014**
(21) Anmeldenummer: 11158942.0
(22) Anmeldetag: 21.03.2011
(51) Int. Cl.: B29C 47/08, B29C 47/66, B29C 47/82, B29C 45/73

(54) **Extruder und Verfahren zum Schließen eines Verbindungsgangs**
Extruder and method for closing a connection passage
Extrudeur et procédé de fermeture d'un passage de liaison

(30) Priorität: 23.03.2010 DE 102010003154
(43) Veröffentlichungstag der Anmeldung: 28.09.2011
(73) Patentinhaber: Extruder Experts GmbH & Co. KG, 52156 Monschau-Imgenbroich (DE)
(72) Erfinder: Zimmermann, Dirk, 52156 Monschau (DE)
(74) Vertreter: Bauer, Dirk

(56) Entgegenhaltungen:
- WO-A1-2010/004595
- CN-A- 101 920 552
- DE-A1-102004 062 566
- DE-A1-102006 028 174
- DE-C1- 3 518 997
- DE-U1- 29 808 176
- JP-A- 5 192 925
- JP-U- 59 012 623

## Beschreibung

Die Erfindung betrifft zum Einen einen Extruder mit mindestens einer Extruderschnecke, die um ihre Längsrichtung rotierbar in einem Arbeitsraum eines Gehäuses gelagert ist, wobei mindestens ein Gehäusesegment des Gehäuses mindestens einen Kühlkanal aufweist, der ausgehend von einer Einlassöffnung von einem Kühlfluid derart durchströmbar ist, dass das Kühlfluid Prozesswärme aus dem Arbeitsraum aufnimmt und durch eine Auslassöffnung abführt und der zwischen zwei zu der Längsrichtung senkrechten Flanschflächen des Gehäusesegments eine Mehrzahl von Gängen und in mindestens einer der Flanschflächen mindestens einen nutförmigen Verbindungsgang zwischen zweien der Gänge aufweist, der mittels eines Deckelements abgedeckt und zu der mindestens einen Flanschfläche verschlossen ist. Die Erfindung betrifft weiterhin ein Verfahren zum Schließen eines Verbindungsgangs, wobei Gänge eines Kühlkanals zwischen zwei Flanschflächen eines Gehäusesegments für ein Gehäuse eines Extruders ausgebildet sind, und wobei der Verbindungsgang nutförmig in einer der Flanschflächen zwischen zweien der Gänge eingebracht ist, mittels eines Deckelements abgedeckt und zu der einen der Flanschflächen verschlossen wird, so dass der Kühlkanal ausgehend von einer Einlassöffnung von einem Kühlfluid derart durchströmbar ist, dass das Kühlfluid Prozesswärme aus einem Arbeitsraum des Gehäuses aufnimmt, in dem eine Extruderschnecke des Extruders um eine zu den Flanschflächen senkrechte Längsrichtung rotierbar gelagert ist, und die Prozesswärme durch eine Auslassöffnung abführt.

Wie in den Druckschriften DE3518997 C1, JP59 012623 U, JP5192925 A und CN101920552 A offenbart, bestehen die Gehäuse derartiger Extruder aus einem oder mehreren Gehäusesegmenten, die in Längsrichtung der Extruderschnecke(n) hintereinander an Flanschflächen zwischen Getriebe und Extruderkopf verschraubt und/oder verspannt werden.

Um die im Arbeitsraum eines solchen Extruders entstehende Prozesswärme abführen zu können, weisen dessen Gehäusesegmente ein Kühlsystem in Form von miteinander verbundenen, im Wesentlichen parallel zur Längsrichtung verlaufenden Gängen auf. Die Verschlüsse und Dichtungen dieser Gänge müssen gegen hohe Temperaturen des Kühlmittels und gegen Dampfschläge beständig sein. Als Kühlmittel kommen zumeist Wasser oder spezielle Kühlflüssigkeiten, für besonders hohe Prozesstemperaturen (oberhalb 350 °C) und spezielle Anforderungen auch Luft oder Edelgase zum Einsatz.

Extruder und Verfahren der einleitend genannten Art sind allgemein bekannt: An Extrudern von Coperion GmbH, Krauss-Maffei Berstorff, Theysohn, Ermafa, Reiffenhäuser, Maris (Italien), ICMA (Italien), Toshiba (Japan), Kobe (Japan), JSW (Japan), Baker Perkins (England), Bühler (Schweiz), Clextral (Frankreich), COMAC (Italien), Ikegai (Japan), Keya (China), Davis Standard (USA) und Entek (USA) weisen aus dem Vollen gefräste Gehäusesegmente parallel zur Längsrichtung zwischen den Flanschflächen durchgehend gebohrte Gänge auf, die in jeder Flanschfläche in einer ovalen, den Arbeitsraum ringförmig umschließenden Lagernut enden. Zwischen je zwei benachbarten Gängen sind in diese Lagernute jeweils Verbindungsgänge eingebracht.

Als gemeinsames Deckelement der Verbindungsgänge einer Flanschfläche dieser bekannten Extruder wird eine ringförmige Leiste in der Regel gelasert, die relativ genau in die Lagernut hineinpaßt. Diese Leiste wird in die Lagernut eingelegt, anschließend die bis zur Oberfläche des Flanschs verbleibende Höhe der Lagernut mit einer Schweißnaht in der Regel in mehreren Schichten zugelegt und zuletzt der überstehende Schweißwulst bis zur Oberfläche des Flanschs abgeschliffen.

Im Betrieb der bekannten Extruder kristallisieren die häufig stark mineralienhaltigen Kühlmittel an den Wänden der Gänge (sog. "Kesselsteinbildung") und verschließen diese zunehmend. Da der Zugang zu den Gängen des Kühlkanals dauerhaft verschlossen ist, können diese nicht gereinigt werden. Die Gehäusesegmente müssen daher nach einer gewissen Betriebszeit ersetzt und entsorgt werden.

Der schweißtechnische Verschluss der Lagernut führt aufgrund der hohen Menge an Schweißgut und darin verbleibender Poren häufig zu Undichtigkeiten in den Flanschflächen der Gehäusesegmente dieser bekannten Extruder.

Im weiteren Umfeld der Erfindung ist es bekannt, anstelle der nutförmig in die Flanschfläche eingebrachten Verbindungsgänge quer zur Längsrichtung Verbindungsbohrungen in die Flansche einzubringen, die die Gänge des Kühlkanals schneiden und die Enden der Gänge wie der Verbindungsbohrungen - soweit diese nicht als Ein- oder Auslassöffnung dienen sollen- mittels Dichtstopfen zu verschließen. Hierbei kommen insbesondere napfförmige Hülsen zum Einsatz, in die eine Kugel eingeschlagen wird.

Zur Wartung und Reinigung des Kühlkanals lassen sich die Dichtstopfen durch Ausbohren entfernen. Anschließend muss zunächst der Sitz des Dichtstopfens im Gehäusesegment nachgearbeitet werden, bevor der Kühlkanal durch Einschlagen des nächstgrößeren Dichtstopfens wieder geschlossen werden kann.

### Aufgabe

Der Erfindung liegt die Aufgabe zugrunde, die Wartung und Reinigung des Kühlkanals zu vereinfachen.

### Lösung

Ausgehend von den bekannten Extrudern wird nach der Erfindung vorgeschlagen, dass das Deckelement mit einem Dichtelement (17, 47), einem Stützelement (19, 48) und einem weiteren Deckelement (15, 46) zu einem Paket (45) verbunden ist, das in der mindestens einen Flanschfläche (4, 28) lose aufliegt, an einer mit dieser verflanschten benachbarten Flanschfläche (4, 28) eines benachbarten Gehäusesegments (1, 24, 53) abgestützt und durch diese Abstützung in der Flanschfläche (4, 28) gehalten ist, wobei das Dichtelement (17, 47) den Abschluss des Verbindungsgangs (7, 55) zu der Flanschfläche (4, 28) abdichtet, das Stützelement (19, 48) einen Abstand zwischen dem Dichtelement (17, 47) und der benachbarten Flanschfläche (4, 28) überbrückt und das weitere Deckelement (15, 46) einen Verbindungsgang (7, 55) zwischen zwei Gängen (5, 26, 54) eines Kühlkanals (50) des benachbarten Gehäusesegments (1, 24, 53) abdeckt. Im Betrieb des erfindungsgemäßen Extruders ist das Deckelement durch die Stützfläche abgestützt, also mittelbar durch deren Verflanschung mit dem Gehäusesegment auf dem Verbindungsgang gehalten. Nach Demontage der Stützfläche von dem Gehäusesegment kann das Deckelement entnommen und das Kühlsystem gewartet und gereinigt werden. Das Dichtelement vermeidet den Übergang von Kühlmittel aus dem Kühlkanal in die Flanschfläche und darüber hinaus nach Innen in den Arbeitsraum des Extruders oder nach Außen in die Umgebung. Insbesondere kann das Dichtelement an einer zwischen Verbindungsgang und Lagernut ausgebildeten Stufe abgestützt sein. Die Stützfläche drückt dann das Dichtelement über das Stützelement tiefer in die Lagernut, so dass dieses zu den Seitenwänden der Lagernut den Verbindungsgang sicher abdichtet. Das Stützelement kann Laschen aufweisen, die mit der Flanschfläche verschraubt sind, um ein unbeabsichtigtes Lösen des Deckelements aus der Flanschfläche zu vermeiden, solange es nicht mit der Stützfläche verflanscht ist. Das Abstützen des Deckelements an dem weiteren Deckelement des benachbarten Gehäusesegments vermeidet Belastungen der umgebenden Flanschflächen. Dadurch, dass das Deckelement und das weitere Deckelement zu einem Paket verbunden sind, ist bei der Montage und Demontage eines erfindungsgemäßen Extruders gegenüber einzelnen Deckelementen die Handhabung der beiden Deckelemente signifikant vereinfacht.

Vorzugsweise ist in einem erfindungsgemäßen Extruder in die mindestens eine Flanschfläche mindestens eine Lagernut, und in diese der mindestens eine Verbindungsgang eingebracht, so dass zwischen Lagernut und Verbindungsgang eine Stufe entsteht. In die Lagernut kann eine Mehrzahl von Verbindungsgängen eingebracht sein, die jeweils zwei Gänge des Kühlkanals verbinden, so dass das Deckelement die Mehrzahl der Verbindungsgänge überdeckt. Gegenüber der Verwendung mehrerer einzelner Deckelemente ist die Handhabung eines solchen gemeinsamen Deckelements für mehrere Verbindungsgänge vereinfacht.

Besonders bevorzugt umschließt in einem erfindungsgemäßen Extruder die Lagernut den Arbeitsraum ringförmig. So können alle Verbindungsgänge mit einem einzigen gemeinsamen Deckelement abgedeckt werden.

Weiterhin kann das Paket auf jedem Deckelement ein Dichtelement und zwischen den Dichtelementen ein Stützelement aufweisen. Einerseits können die Dichtelemente so dünner ausgeführt werden, andererseits wirkt das Stützelement versteifend für das gesamte Paket.

Die Gehäusesegmente des Gehäuses für einen erfindungsgemäßen Extruder können vorteilhaft in einem Urformverfahren hergestellt sein. Insbesondere kann ein solches Gehäusesegment in einem Grau- oder Tempergussverfahren, durch Sintern oder Heißisostatisches Pressen hergestellt sein.

Gegenüber den aus dem Stand der Technik bekannten gefrästen Gehäusesegmenten sind solche Gehäusesegmente signifikant preisgünstiger in der Herstellung. Darüber hinaus erlauben Gießverfahren durch das Einlegen entsprechend geformter Kerne die Herstellung von konturnah gekrümmten Gängen nahe am Arbeitsraum.

Ausgehend von den bekannten Verfahren wird nach der Erfindung vorgeschlagen, dass ein Paket (45), zu dem das Deckelement (15, 46) mit einem Dichtelement (17, 47), einem Stützelement (19, 48) und einem weiteren Deckelement (15, 46) verbunden ist, derart in der mindestens einen Flanschfläche (4, 28) lose aufgelegt und an einer mit dieser verflanschten benachbarten Flanschfläche (4, 28) eines benachbarten Gehäusesegments (1, 24, 53) abgestützt wird, dass es durch diese Abstützung in der Flanschfläche (4, 28) gehalten wird, wobei das Dichtelement (17, 47) den Abschluss des Verbindungsgangs (7, 55) zu der Flanschfläche (4, 28) abdichtet, das Stützelement (19, 48) einen Abstand zwischen Dichtelement (17, 47) und der benachbarten Flanschfläche (4, 28) überbrückt und das weitere Deckelement (15, 46) einen Verbindungsgang (7, 55) zwischen zwei Gängen (5, 26, 54) eines Kühlkanals (50) des benachbarten Gehäusesegments (1, 24, 53) abdeckt.

### Ausftihrungsbeispiel

Die Erfindung wird nachfolgend anhand eines Ausführungsbeispiels erläutert. Es zeigen
- Fig. 1a: eine Draufsicht auf eine Flanschfläche eines ersten Gehäusesegments eines erfindungsgemäßen Extruders,
- Fig. 1b: das erste Gehäusesegment in einer perspektivischen Ansicht,
- Fig. 1c: ein Detail der perspektivischen Ansicht des ersten Gehäusesegments,
- Fig. 2: ein Detailschnitt durch das erste Gehäusesegment,
- Fig. 3a: eine Draufsicht auf eine Flanschfläche eines zweiten Gehäusesegments eines erfindungsgemäßen Extruders,
- Fig. 3b: das zweite Gehäusesegment in einer Seitenansicht,
- Fig. 3c: das zweite Gehäusesegment in einer perspektivischen Ansicht,
- Fig. 3d: ein Detail der perspektivischen Ansicht des zweiten Gehäusesegments,
- Fig. 4: ein Paket mit zwei Deckelementen für das zweite Gehäusesegment,
- Fig. 5: das Kühlsystem des zweiten Gehäusesegments,.
- Fig. 6a: eine Draufsicht auf eine Flanschfläche eines dritten Gehäusesegments eines erfindungsgemäßen Extruders,
- Fig. 6b: das dritte Gehäusesegment in einer perspektivischen Ansicht,
- Fig. 6c: ein Detail der perspektivischen Ansicht des dritten Gehäusesegments.

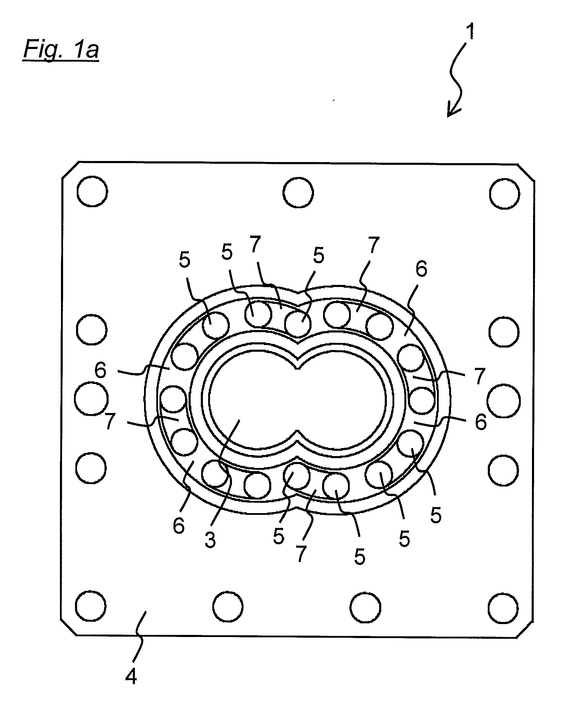

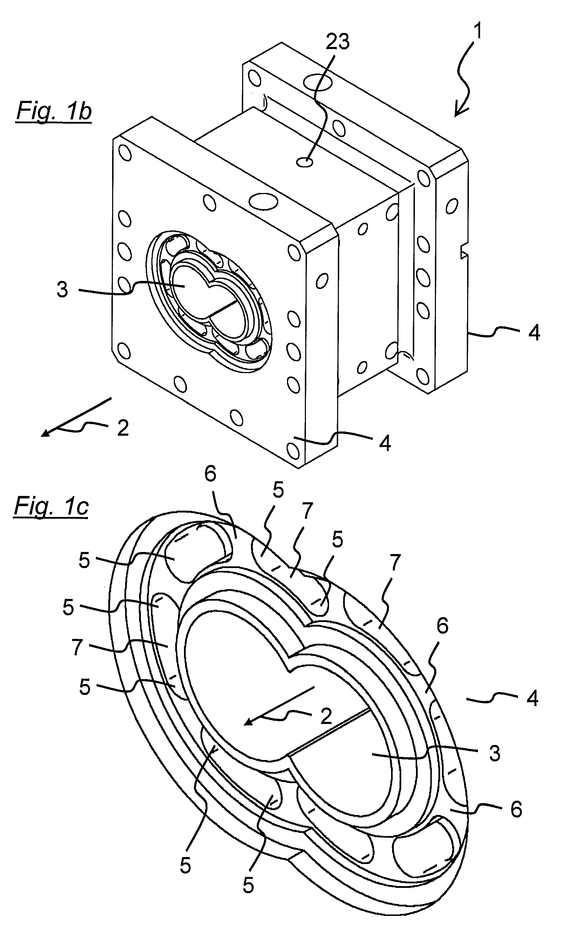

Das in Figur 1a bis 1c gezeigte Gehäusesegment 1 eines nicht weiter dargestellten segmentierten Gehäuses eines erfindungsgemäßen Doppelwellenextruders weist einen in Längsrichtung 2 zweier nicht dargestellter Extruderschnecken sich erstreckenden Arbeitsraum 3 mit einem Querschnitt einer liegenden Acht und zwei zu der Längsrichtung 2 senkrechte Flanschflächen 4 auf. Das Gehäusesegment 1 ist im Tempergussverfahren hergestellt, der Arbeitsraum 3 und die Flanschflächen 4 sind spanend nachbearbeitet. In dem Extruder können die Extruderschnecken rotierbar gelagert werden.

Das Gehäusesegment 1 weist einen Kühlkanal mit 16 zwischen den Flanschflächen 4 parallel zu der Längsrichtung 2 verlaufenden Gängen 5 auf, die in den Flanschflächen 4 in einer Lagernut 6 enden, die den Arbeitsraum 3 ringförmig umschließt. In die Lagernut 6 sind zwischen je zwei benachbarten Gängen 5 gleichfalls nutförmige (also als langgestreckte Vertiefung in der Flanschfläche 4 ausgebildete) Verbindungsgänge 7 eingebracht.

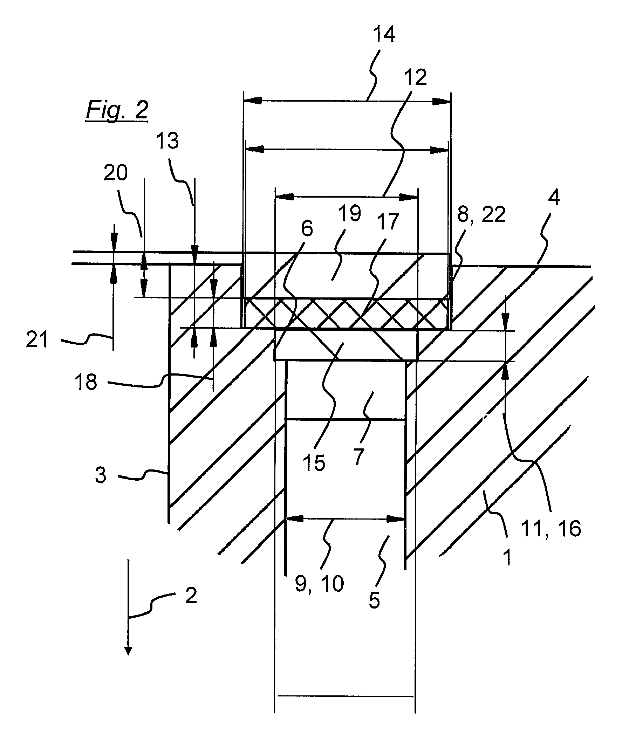

Figur 2 zeigt einen parallel zu der Längsrichtung 2 durch einen Gang des Kühlkanals und den anschließenden Verbindungsgang 7 zum nicht dargestellten benachbarten Kühlkanal geführten Schnitt im vormontierten Zustand. Die Lagernut 6 ist breiter als der Verbindungsgang 7 und weist darüber hinaus zur Flanschfläche 4 eine weitere Verbreiterung 8 auf.

Die Gänge 5 weisen einen Durchmesser 9 und die Verbindungsgänge 7 eine Breite 10 von 8 mm auf. Die Lagernut 6 weist bis zu einer Höhe 11 von 2 mm eine Breite 12 von 9,5 mm und in der Verbreiterung 8 bis zur Flanschfläche 4 eine Höhe 13 von 4,2 mm und eine Breite 14 von 14 mm auf.

In dem dargestellten vormontierten Zustand ist mit einer leichten Spielpassung in die Lagernut 6 ein aus Stahlblech gelasertes Deckelement 15 mit einer Dicke 16 von 2 mm eingelegt. Mit dem Deckelement 15 verbunden und in die Verbreiterung 8 der Lagernut 6 gleichfalls mit einer leichten Spielpassung (13,5 mm) eingelegt ist ein Dichtelement 17 aus Graphit mit drei integrierten Edelstahlfolien (beispielsweise Sigraflex Hochdruck der SGL CARBON SE, Wiesbaden/DE) mit einer Dicke 18 von 2 mm. Mit dem Dichtelement 17 verbunden und in die Verbreiterung 8 mit einer Übergangspassung (13,8 mm) eingeklemmt ist ein Stützelement 19 mit einer Dicke 20 von 3 mm. In dem vormontierten Zustand steht das Stützelement 19 damit um einen Überstand 21 von etwa 0,8 mm aus der Flanschfläche 4 heraus.

Im vormontierten Zustand hält die Klemmung des Stützelements 19 auch das Dichtelement 17 und das Deckelement 15 in der Lagernut 6. Beim Verschrauben mit der korrespondierenden Flanschfläche 4 eines anschließenden Getriebes oder Extruderkopfes wird das Stützelement 19 in die Lagernut 6 gepresst, wobei das Dichtelement 17 sich leicht ausdehnt und gegenüber der Wandung 22 der Lagernut 6 dichtend abschließt.

Der Kühlkanal in dem Gehäusesegment 1 ist erst im montierten Zustand dicht und ausgehend von einer Einlassöffnung 23 von einem nicht dargestellten Kühlfluid derart durchströmbar, dass das Kühlfluid Prozesswärme aus dem Arbeitsraum 3 aufnimmt und durch eine nicht dargestellte Auslassöffnung abführt.

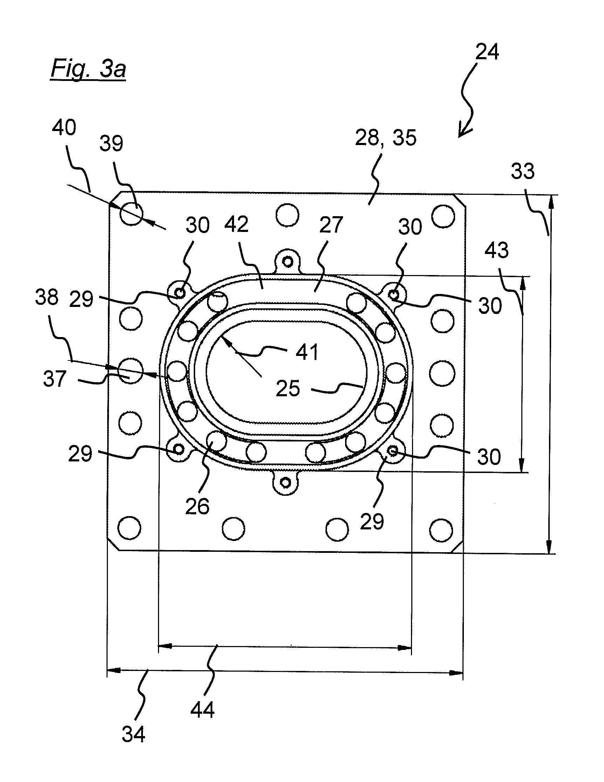

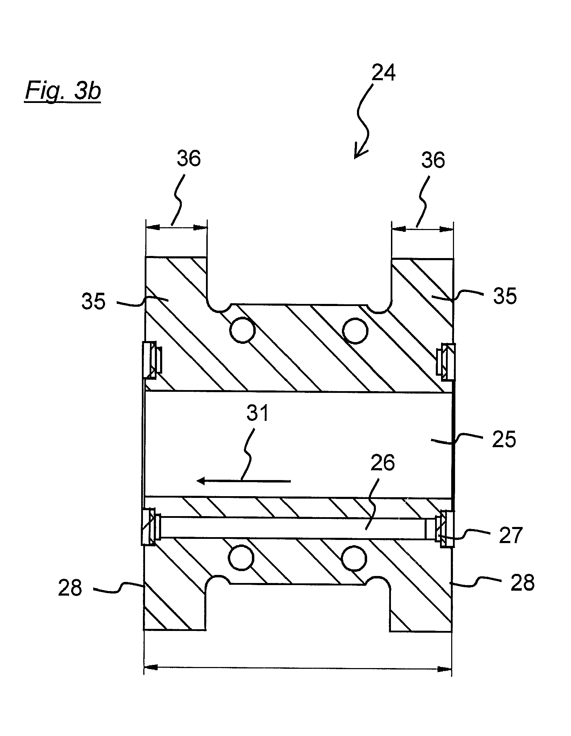

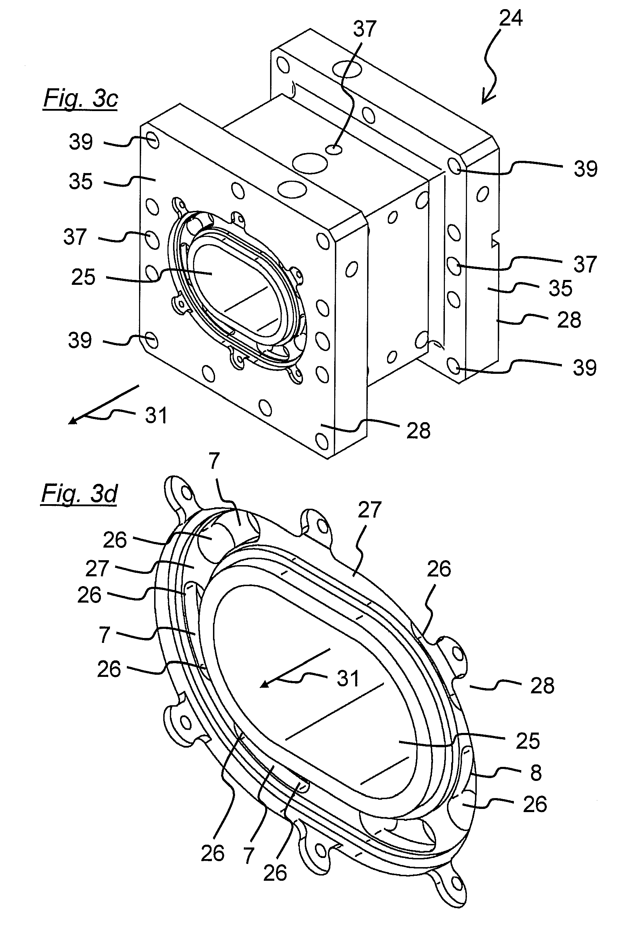

Das in Figur 3a bis 3d gezeigte zweite Gehäusesegment 24 eines zweiten erfindungsgemäßen Doppelschneckenextruders entspricht im Wesentlichen dem zuvor beschriebenen ersten Gehäusesegment 1, weist aber einen Arbeitsraum 25 mit ovalem Querschnitt auf. Zum Betrieb des Doppelschneckenextruders wird in den Arbeitsraum 25 eine nicht dargestellte Verschleißbuchse mit dem Querschnitt des Arbeitsraums 25 des ersten Gehäusesegments 1 eingesetzt.

Das zweite Gehäusesegment 24 weist einen Kühlkanal mit zwölf Gängen 26 sowie ausgehend von der Lagernut 27 sechs in die Flanschfläche 28 eingebrachte Aufnahmen 29 und in jeder der Aufnahmen 29 je eine Gewindebohrung 30 auf. In den Aufnahmen 29 können an einem nicht dargestellten Deckelement ausgebildete Befestigungslaschen zur Vormontage angeschraubt werden. Eine für den Betrieb des Doppelschneckenextruders hinreichende und insbesondere auch bei allfälligen Temperatur- und Druckschwankungen beständige Dichtwirkung des gleichfalls nicht dargestellten Dichtelements 17 in der Lagernut 27 wird durch das Anschrauben nicht erzielt. Auch hier schließt das Dichtelement 17 erst nach dem Verschrauben mit einer korrespondierenden Flanschfläche 28 gegenüber der Lagernut 27 dichtend ab.

Die Maße des zweiten Gehäusesegments 24 entsprechen gleichfalls im Wesentlichen dem des zuvor beschriebenen ersten Gehäusesegments 1: Das Gehäusesegment 24 weist in der Längsrichtung 31 eine Länge 32 von 120 mm sowie eine Höhe 33 und Breite 34 von jeweils 144 mm auf. Die Flansche 35 weisen jeweils in der Längsrichtung 31 eine Dicke 36 von 24 mm auf und sind mit Führungen 37 mit einem Durchmesser 40 von 10 mm und Bohrungen 39 für die Verschraubung mit einem Durchmesser 40 von 9 mm versehen. Der Arbeitsraum 25 weist einen Radius 40 von 20,5 mm, das Oval 42 der umlaufenden Lagernut 27 eine Höhe 43 von 78,5 mm und eine Breite 44 von 102,5 mm auf.

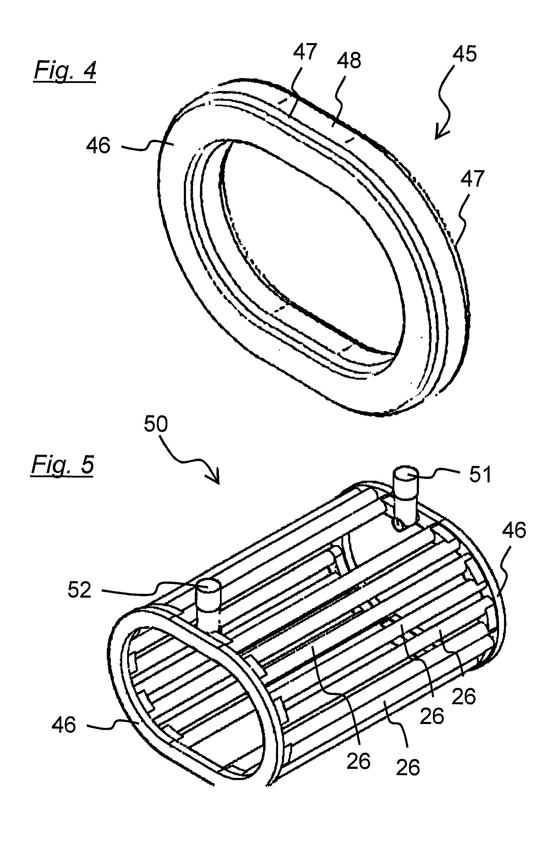

Figur 4 zeigt ein Paket 45 mit zwei Deckelementen 46 für den zweiten erfindungsgemäßen Extruder. Auf den Deckelementen 46 ist jeweils ein Dichtelement 47 aufgebracht und zwischen den Dichtelementen 17 ein Stützelement 48. Die Maße und Materialien der Deckelemente 46, der Dichtelemente 17 und des Stützelements entsprechen im Wesentlichen denen, die zuvor für das erste Gehäusesegment 1 beschrieben wurden.

Das Stützelement 48 weist jeweils einen geringfügig größeren äußeren und einen geringfügig geringeren Durchmesser als die Dichtelemente 17 auf, die Dichtelemente 17 sind entsprechend geringfügig breiter als die Deckelemente 46, so dass das Paket 45 zu beiden Dichtflächen 49 jeweils leicht ballig ist.

Bei der Montage des zweiten erfindungsgemäßen Extruders wird das Paket 45 in die Lagernut 27 eingelegt und ein nachfolgendes (nicht dargestelltes) Gehäusesegment oder ein (gleichfalls nicht dargestelltes) Abschlusselement an der Einzugs- oder an der Austragszone des Extrudergehäuses aufgesetzt und mit dem Gehäusesegment 24 verschraubt und verklammert.

Der in Figur 5 separat dargestellte Kühlkanal 50 des zweiten Gehäusesegments 24 ist im montierten Zustand ausgehend von einer Einlassöffnung 51 von einem nicht dargestellten Kühlfluid derart durchströmbar, dass das Kühlfluid Prozesswärme aus dem Arbeitsraum 25 aufnimmt und durch eine Auslassöffnung 52 abführt.

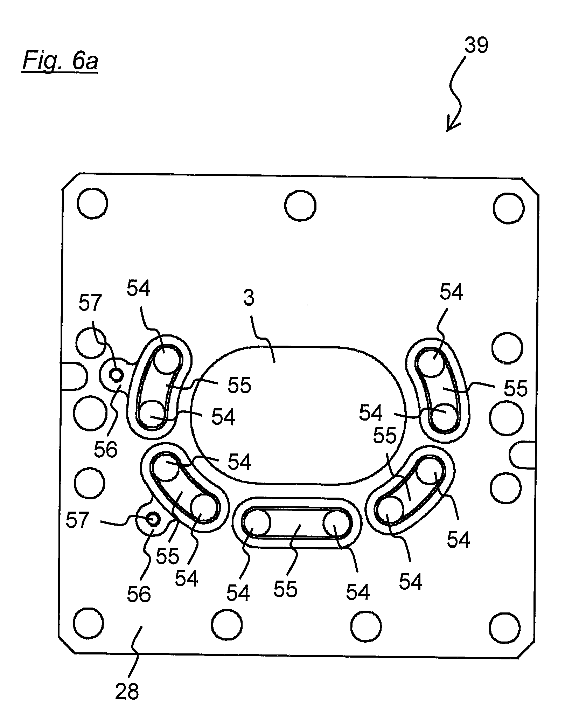

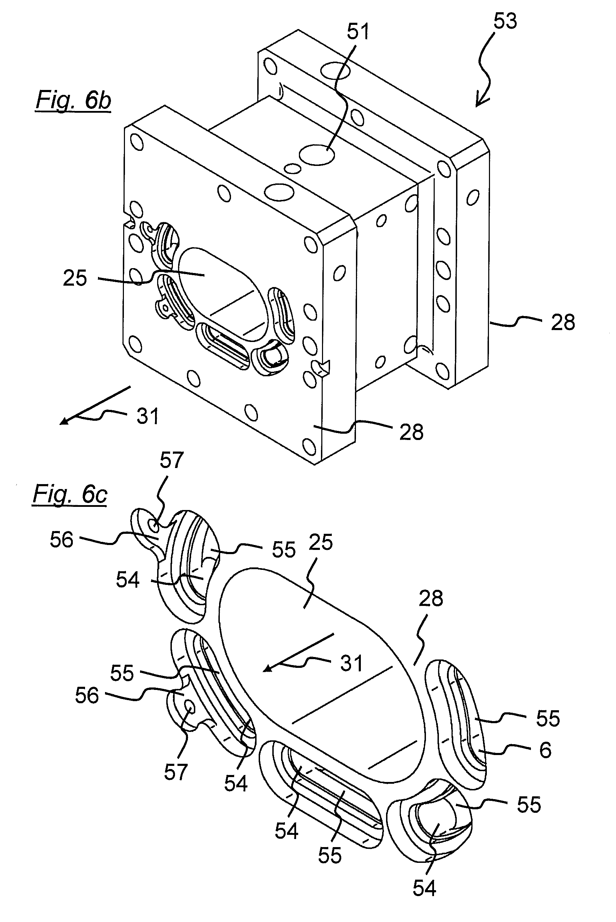

Das in Figur 6a bis 6c gezeigte dritte Gehäusesegment 53 eines dritten erfindungsgemäßen Doppelschneckenextruders entspricht im Wesentlichen dem zuvor beschriebenen zweiten Gehäusesegment 24, weist aber keine umlaufende Lagernut auf. Die Gänge 54 des Kühlkanals 50 sind lediglich paarweise durch Verbindungsgängen 55 verbunden und werden jeweils paarweise durch nicht dargestellte einzelne Pakete aus Deck-, Dicht- und Stützelementen verschlossen. Die Stützelemente können zur Vereinfachung der Montage auf einer (gleichfalls nicht dargestellten) gemeinsamen Trägerfolie aus einem dünnen Stahlblech angeordnet sein, die - wiederum um eine unbeabsichtigte Demontage zu vermeiden - mit hierzu ausgebildeten Befestigungslaschen in Aufnahmen 56 eingelegt und in Gewindebohrungen 57 verschraubt werden können.

In den Figuren sind
- 1: Gehäusesegment
- 2: Längsrichtung
- 3: Arbeitsraum
- 4: Flanschfläche
- 5: Gang
- 6: Lagernut
- 7: Verbindungsgang
- 8: Verbreiterung
- 9: Durchmesser
- 10: Breite
- 11: Höhe
- 12: Breite
- 13: Höhe
- 14: Breite
- 15: Deckelement
- 16: Dicke
- 17: Dichtelement
- 18: Dicke
- 19: Stützelement
- 20: Dicke
- 21: Überstand
- 22: Wandung
- 23: Einlassöffnung
- 24: Gehäusesegment
- 25: Arbeitsraum
- 26: Gang
- 27: Lagernut
- 28: Flanschfläche
- 29: Aufnahme
- 30: Gewindebohrung
- 31: Längsrichtung
- 32: Länge
- 33: Höhe
- 34: Breite
- 35: Flansch
- 36: Dicke
- 37: Führung
- 38: Durchmesser
- 39: Bohrung
- 40: Durchmesser
- 41: Radius
- 42: Oval
- 43: Höhe
- 44: Breite
- 45: Paket
- 46: Deckelement
- 47: Dichtelement
- 48: Stützelement
- 49: Dichtfläche
- 50: Kühlkanal
- 51: Einlassöffnung
- 52: Auslassöffnung
- 53: Gehäusesegment
- 54: Gang
- 55: Verbindungsgang
- 56: Aufnahme
- 57: Gewindebohrung

## Patentansprüche

1. Extruder mit mindestens einer Extruderschnecke, die um ihre Längsrichtung (2, 31) rotierbar in einem Arbeitsraum (3) eines Gehäuses gelagert ist, wobei mindestens ein Gehäusesegment (1, 24, 53) des Gehäuses mindestens einen Kühlkanal (50) aufweist,
- der ausgehend von einer Einlassöffnung (23, 51) von einem Kühlfluid derart durchströmbar ist, dass das Kühlfluid Prozesswärme aus dem Arbeitsraum (3) aufnimmt und durch eine Auslassöffnung (52) abführt und
- der zwischen zwei zu der Längsrichtung (2, 31) senkrechten Flanschflächen (4, 28) des Gehäusesegments (1, 24, 53) eine Mehrzahl von Gängen (5, 26, 54) und in mindestens einer der Flanschflächen (4, 28) mindestens einen nutförmigen Verbindungsgang (7, 55) zwischen zweien der Gänge (5, 26, 54) aufweist, der mittels eines Deckelements (15, 46) abgedeckt und zu der mindestens einen Flanschfläche (4, 28) verschlossen ist,
***dadurch gekennzeichnet, dass*** das Deckelement (15, 46) mit einem Dichtelement (17, 47), einem Stützelement (19, 48) und einem weiteren Deckelement (15, 46) zu einem Paket (45) verbunden ist, das in der mindestens einen Flanschfläche (4, 28) lose aufliegt, an einer mit dieser verflanschten benachbarten Flanschfläche (4, 28) eines benachbarten Gehäusesegments (1, 24, 53) abgestützt und durch diese Abstützung in der Flanschfläche (4, 28) gehalten ist, wobei das Dichtelement (17, 47) den Abschluss des Verbindungsgangs (7, 55) zu der Flanschfläche (4, 28) abdichtet, das Stützelement (19, 48) einen Abstand zwischen dem Dichtelement (17, 47) und der benachbarten Flanschfläche (4, 28) überbrückt und das weitere Deckelement (15, 46) einen Verbindungsgang (7, 55) zwischen zwei Gängen (5, 26, 54) eines Kühlkanals (50) des benachbarten Gehäusesegments (1, 24, 53) abdeckt.

2. Extruder nach dem vorgenannten Anspruch, ***dadurch gekennzeichnet, dass*** in die mindestens eine Flanschfläche (4, 28) mindestens eine Lagernut (6, 27), und in diese der mindestens eine Verbindungsgang (7, 55) eingebracht ist.

3. Extruder nach dem vorgenannten Anspruch, ***dadurch gekennzeichnet, dass*** die Lagernut (6, 27) den Arbeitsraum (3) ringförmig umschließt.

4. Extruder nach einem der vorgenannten Ansprüche, ***dadurch gekennzeichnet, dass*** die Gehäusesegmente (1, 24, 53) des Gehäuses in einem Urformverfahren hergestellt sind.

5. Verfahren zum Schließen eines Verbindungsgangs (7, 55), wobei Gänge (5, 26, 54) eines Kühlkanals (50) zwischen zwei Flanschflächen (4, 28) eines Gehäusesegments (1, 24, 53) für ein Gehäuse eines Extruders ausgebildet sind, und wobei der Verbindungsgang (7, 55) nutförmig in einer der Flanschflächen (4, 28) zwischen zweien der Gänge (5, 26, 54) eingebracht ist, mittels eines Deckelements (15, 46) abgedeckt und zu der einen der Flanschflächen (4, 28) verschlossen wird, so dass der Kühlkanal (50) ausgehend von einer Einlassöffnung (23, 51) von einem Kühlfluid derart durchströmbar ist, dass das Kühlfluid Prozesswärme aus einem Arbeitsraum (3) des Gehäuses aufnimmt, in dem eine Extruderschnecke des Extruders um eine zu den Flanschflächen (4, 28) senkrechte Längsrichtung (2, 31) rotierbar gelagert ist, und die Prozesswärme durch eine Auslassöffnung (52) abführt, ***dadurch gekennzeichnet, dass*** ein Paket (45), zu dem das Deckelement (15, 46) mit einem Dichtelement (17, 47), einem Stützelement (19, 48) und einem weiteren Deckelement (15, 46) verbunden ist, derart in der mindestens einen Flanschfläche (4, 28) lose aufgelegt und an einer mit dieser verflanschten benachbarten Flanschfläche (4, 28) eines benachbarten Gehäusesegments (1, 24, 53) abgestützt wird, dass es durch diese Abstützung in der Flanschfläche (4, 28) gehalten wird, wobei das Dichtelement (17, 47) den Abschluss des Verbindungsgangs (7, 55) zu der Flanschfläche (4, 28) abdichtet, das Stützelement (19, 48) einen Abstand zwischen Dichtelement (17, 47) und der benachbarten Flanschfläche (4, 28) überbrückt und das weitere Deckelement (15, 46) einen Verbindungsgang (7, 55) zwischen zwei Gängen (5, 26, 54) eines Kühlkanals (50) des benachbarten Gehäusesegments (1, 24, 53) abdeckt.

## Claims

1. An extruder with at least one extruder screw which is mounted rotatably around its longitudinal direction (2, 31) in a working chamber (3) of a housing, wherein at least one housing segment (1, 24, 53) of the housing comprises at least one cooling channel (50),
- through which a cooling fluid can flow proceeding from an inlet opening (23, 51), in such a way that the cooling fluid takes up process heat from the working chamber (3) and carries it away through an outlet opening (52) and
- which comprises a plurality of passages (5, 26, 54) between two flange faces (4, 28) of the housing segment (1, 24, 53), said flange faces being normal to the longitudinal direction (2, 31), and at least one groove-shaped connecting passage (7, 55) between two of the passages (5, 26, 54) in at least one of the flange faces (4, 28), said connecting passage being covered by means of a cover element (15, 46) and being closed with respect to the at least one flange face (4, 28),
**characterised in that** the cover element (15, 46) is connected to a sealing element (17, 47), a supporting element (19, 48) and a further cover element (15, 46) to form a pack (45), which lies loosely in the at least one flange face (4, 28), is supported on an adjacent flange face (4, 28) of an adjacent housing segment (1, 24, 53), said adjacent flange face being flange-connected to the aforementioned flange face, and is held by this support in the flange face (4, 28), wherein the sealing element (17, 47) seals off the termination of the connecting passage (7, 55) with respect to the flange face (4, 28), the supporting element (19, 48) bridges a gap between the sealing element (17, 47) and the adjacent flange face (4, 28) and the further cover element (15, 46) covers a connecting passage (7, 55) between two passages (5, 26, 54) of a cooling channel (50) of the adjacent housing segment (1, 24, 53).

2. The extruder according to the aforementioned claim, **characterised in that** at least one bearing groove (6, 27) is introduced into the at least one flange face (4, 28) and the at least one connecting passage (7, 55) is introduced into said bearing groove.

3. The extruder according to the aforementioned claim, **characterised in that** the bearing groove (6, 27) surrounds the working chamber (3) in the shape of a ring.

4. The extruder according to any one of the aforementioned claims, **characterised in that** the housing segments (1, 24, 53) of the housing are produced in an original moulding process.

5. A method for closing a connecting passage (7, 55), wherein passages (5, 26, 54) of a cooling channel (50) are constituted between two flange faces (4, 28) of a housing segment (1, 24, 53) for a housing of an extruder, and wherein the connecting passage (7, 55) is introduced in a groove-like form in one of the flange faces (4, 28) between two passages (5, 26, 54), is covered by means of a cover element (15, 46) and is closed with respect to one of the flange faces (4, 28), so that a cooling fluid can flow through the cooling channel (50) proceeding from an inlet opening (23, 51), in such a way that the cooling fluid takes up process heat from a working chamber (3) of the housing, in which an extruder screw of the extruder is mounted rotatably around a longitudinal direction (2, 31) which is normal to the flange faces (4, 28), and carries away the process heat through an outlet opening (52), **characterised in that** a pack (45), to which the cover element (15, 46) is connected with a sealing element (17, 47), a supporting element (19, 48) and a further cover element (15, 46), lies loosely in the at least one flange face (4, 28) and is supported on an adjacent flange face (4, 28) of an adjacent housing segment (1, 24, 53), said adjacent flange face being flange-connected to the aforementioned flange face, in such a way that said pack is held by this support in the flange face (4, 28), wherein the sealing element (17, 47) seals off the termination of the connecting passage (7, 55) with respect to the flange face (4, 28), the supporting element (19, 48) bridges a gap between the sealing element (17, 47) and the adjacent flange face (4, 28) and the further cover element (15, 46) covers a connecting passage (7, 55) between two passages (5, 26, 54) of a cooling channel (50) of the adjacent housing segment (1, 24, 53).

## Revendications

1. Extrudeuse comprenant au moins une vis sans fin qui est disposée dans un espace de travail (3) d'un carter en pouvant tourner sur son sens longitudinal (2, 31), sachant qu'au moins un segment de carter (1, 24, 53) du carter présente au moins un canal de refroidissement (50),
- qui peut être traversé, en partant d'une ouverture d'admission (23, 51), par un fluide de refroidissement de telle sorte que le fluide de refroidissement absorbe de la chaleur de procédé de l'espace de travail (3) et l'évacue par une ouverture d'évacuation (52) et
- qui présente une pluralité de passages (5, 26, 54) entre deux faces de bride (4, 28) du segment de carter (1, 24, 53) verticales au sens longitudinal (2, 31), et présente dans au moins une des faces de bride (4, 28), au moins un passage de liaison (7, 55) en forme de rainure entre deux des passages (5, 26, 54), qui est recouvert par un élément de couverture (15, 46) vers lequel au moins une face de bride (4, 28) est fermée,
**caractérisée en ce que** l'élément de couverture (15, 46) est relié avec un élément étanche (17, 47), un élément d'appui (19, 48) et un élément de couverture (15, 46) supplémentaire à un paquet (45) qui repose de façon lâche dans l'au moins une face de bride (4, 28), est appuyé sur une face de bride (4, 28) voisine bridée avec celle-ci d'un segment de carter (1, 24, 53) voisin et est maintenu dans la face de bride (4, 28) par cet appui, sachant que l'élément étanche (17, 47) étanchéifie la fermeture du passage de liaison (7, 55) vers la face de bride (4, 28), l'élément d'appui (19, 48) comble un écart entre l'élément étanche (17, 47) et la face de bride (4, 28) voisine, et l'élément de couverture (15, 46) supplémentaire recouvre un passage de liaison (7, 55) entre deux passages (5, 26, 54) d'un canal de refroidissement (50) du segment de carter (1, 24, 53) voisin.

2. Extrudeuse selon la revendication 1, **caractérisée en ce qu'**au moins une rainure de palier (6, 27) est insérée dans l'au moins une face de bride (4, 28) et l'au moins un passage de liaison (7, 55) est inséré dans celle-ci.

3. Extrudeuse selon la revendication précédente, **caractérisée en ce que** la rainure de palier (6, 27) entoure l'espace de travail (3) de façon annulaire.

4. Extrudeuse selon l'une des revendications précédentes, **caractérisée en ce que** les segments de carter (1, 24, 53) du logement sont fabriqués dans un procédé de moulage primitif.

5. Procédé destiné à la fermeture d'un passage de liaison (7, 55), dans lequel des passages (5, 26, 54) d'un canal de refroidissement (50) sont formés entre deux faces de bride (4, 28) d'un segment de carter (1, 24, 53) pour un carter d'une extrudeuse, et dans lequel le passage de liaison (7, 55) est inséré en forme de rainure dans l'une des faces de bride (4, 28) entre deux des passages (5, 26, 54), couvert au moyen d'un élément de couverture (15, 46) et fermé vers l'une des faces de bride (4, 28), de telle sorte que le canal de refroidissement (50) peut être traversé, en partant d'une ouverture d'admission (23, 51) par un fluide de refroidissement de telle sorte que le fluide de refroidissement absorbe de la chaleur de procédé d'un espace de travail (3) du carter, dans lequel une vis sans fin de l'extrudeuse est disposée en pouvant tourner dans un sens longitudinal vertical (2, 31) aux faces de bride (4, 28), et évacue la chaleur de procédé par une ouverture d'évacuation (52), **caractérisé en ce qu'**un paquet (45) auquel l'élément de couverture (15, 46) avec un élément étanche (17, 47), un élément d'appui (19, 48) et un élément de couverture (15, 46) supplémentaire est relié, est placé ainsi de façon lâche dans l'au moins une face de bride (4, 28) et appuyé sur une face de bride (4, 28) voisine bridée avec celle-ci, d'un segment de carter (1, 24, 53) voisin, qu'il est maintenu dans la face de bride (4, 28) par cet appui, sachant que l'élément étanche (17, 47) étanchéifie la fermeture du passage de liaison (7, 55) vers la face de bride (4, 28), l'élément d'appui (19, 48) comble un écart entre l'élément étanche (17, 47) et la face de bride (4, 28) voisine, et l'élément de couverture (15, 46) supplémentaire recouvre un passage de liaison (7, 55) entre deux passages (5, 26, 54) d'un canal de refroidissement (50) du segment de carter (1, 24, 53) voisin.
